# EUROPEAN PATENT APPLICATION

(11) **EP 4 332 141 A1**
(43) Date of publication of application: **06.03.2024**
(21) Application number: 22796066.3
(22) Date of filing: 25.04.2022
(51) Int. Cl.: C08G 59/04, C08G 59/22, C08G 59/62, C08G 59/68, C09J 163/00

(54) **EPOXY RESIN WITH IMPROVED WATER RESISTANCE AND COMPOSITION COMPRISING SAME**

(30) Priority: 26.04.2021 KR 20210053952
(71) Applicant: Samyang Corporation, Jongno-gu Seoul 03129 (KR)
(72) Inventor: LEE, Jae Hoon, Daejeon 34049 (KR); RYU, Hoon, Daejeon 34127 (KR); IM, Jun Seop, Hwaseong-si Gyeonggi-do 18496 (KR)
(74) Representative: Dietz, Christopher Friedrich
(86) International application number: PCT/KR2022/005856
(87) International publication number: WO 2022/231233

(57) **Abstract**

The present invention relates to an epoxy resin with improved water resistance and a composition comprising same and, more specifically, to: an epoxy resin which is prepared by the reaction of epihalohydrin and a diol component including anhydrosugar alcohol and a diol other than the anhydrosugar alcohol in a specific content ratio, thus exhibiting excellent eco-friendliness and improved water resistance, and, when applied to a coating composition, exhibits an anti-fog effect and at the same time can provide a coating with improved durability against moisture; and a composition comprising the epoxy resin (preferably, an anti-fog coating composition).

## Description

### TECHNICAL FIELD

The present invention relates to an epoxy resin with improved water resistance and a composition comprising the same, and more specifically, the present invention relates to an epoxy resin prepared by the reaction of epihalohydrin and a diol component including anhydrosugar alcohol and a diol other than anhydrosugar alcohol with a specific amount ratio and thus exhibiting excellent eco-friendliness and improved water resistance, and when applied to a coating composition, providing a coating with anti-fog effect and improved durability against moisture at the same time, and a composition comprising the same (preferably, a composition for anti-fog coating).

### BACKGROUND ART

Hydrogenated sugar (also referred to as "sugar alcohol") means a compound obtained by adding hydrogen to the reductive end group in sugar, and generally has a chemical formula of HOCH₂(CHOH)ₙCH₂OH wherein n is an integer of 2 to 5. According to the number of carbon atoms, hydrogenated sugar is classified into tetritol, pentitol, hexitol and heptitol (4, 5, 6 and 7 carbon atoms, respectively). Among them, hexitol having 6 carbon atoms includes sorbitol, mannitol, iditol, galactitol, etc. and in particular, sorbitol and mannitol are very useful materials.

Anhydrosugar alcohol has a diol form with two hydroxyl groups in the molecule, and can be produced by using hexitol derived from starch (for example, Korean Patent No. 10-1079518 and Korean Laid-open Patent Publication No. 10-2012-0066904). Because anhydrosugar alcohol is an environmentally friendly material derived from recyclable natural resources, it has received much interest for a long time and researches on its production continue to proceed. Among such anhydrosugar alcohols, isosorbide produced from sorbitol has the widest industrial applicability at present.

Anhydrosugar alcohol can be used in various fields including treatment of heart and blood vessel diseases, patch adhesive, medicaments such as mouthwash, etc., solvents for compositions in the cosmetics industry, emulsifiers in the food industry, etc. In addition, it can increase the glass transition temperature of polymer materials like polyester, PET, polycarbonate, polyurethane, epoxy resin, etc., and improve the strength of such materials. Furthermore, because anhydrosugar alcohol is an environmentally friendly material derived from natural resources, it is very useful in the plastics industry such as bioplastics and the like. It is also known that anhydrosugar alcohol can be used as an adhesive, environmentally friendly plasticizer, biodegradable polymer, and environmentally friendly solvent for water-soluble lacquer.

As such, anhydrosugar alcohol is receiving much interest because of its wide applicability, and the level of practical industrial application thereof is increasing.

Anti-fog coating is applied on the surface of an article, and when the article is exposed to a humid environment, it prevents fogging on the surface due to the moisture. For instance, Korean Laid-open Patent Publication No. 10-2016-0010133 discloses a coating composition comprising an epoxy resin containing isosorbide which is an anhydrosugar alcohol, and exhibiting anti-fog effect. However, the epoxy resin disclosed therein has insufficient water resistance, and thus there is a problem that, when a coating formed from a composition comprising it is exposed to a humid environment, the durability of the coating against moisture becomes poor and the coating peels off.

Therefore, it has been requested to develop an epoxy resin which exhibits excellent eco-friendliness since biomass raw material such as anhydrosugar alcohol is used for its preparation, and has improved water resistance so as to provide an anti-fog coating with improved durability against moisture.

### PROBLEMS TO BE SOLVED

The purpose of the present invention is to provide an epoxy resin which exhibits excellent eco-friendliness and improved water resistance, and can provide, when applied to a coating composition, a coating with anti-fog effect and improved durability against moisture at the same time, and a composition comprising the same (preferably, a composition for anti-fog coating).

### TECHNICAL MEANS

In order to achieve the above-stated purpose, the present invention provides an epoxy resin prepared by the reaction of a diol component and epihalohydrin, wherein the diol component comprises 46 to 94 parts by weight of anhydrosugar alcohol and 6 to 54 parts by weight of diol other than anhydrosugar alcohol, based on total 100 parts by weight of the diol component.

In other aspect, the present invention provides a method for preparing an epoxy resin, comprising the step of: (1) conducting the first preliminary reaction of anhydrosugar alcohol and epihalohydrin in the presence of basic catalyst; (2) adding diol other than anhydrosugar alcohol to the reaction product obtained in step (1) and conducting the second preliminary reaction; and (3) adding further basic catalyst to the reaction product obtained in step (2) and conducting the main reaction under reduced pressure, wherein the addition amount of the anhydrosugar alcohol is 46 to 94 parts by weight and the addition amount of the diol other than anhydrosugar alcohol is 6 to 54 parts by weight, based on total 100 parts by weight of the sum of the anhydrosugar alcohol and the diol other than anhydrosugar alcohol.

In another aspect, the present invention provides an epoxy resin composition, preferably a composition for anti-fog coating, comprising the epoxy resin; and a curing agent.

In still another aspect, the present invention provides a coated article comprising a coating layer formed by curing the epoxy resin composition on the surface of the article.

### EFFECT OF THE INVENTION

The epoxy resin according to the present invention exhibits excellent eco-friendliness and improved water resistance, and can provide, when applied to a coating composition, a coating with anti-fog effect and improved durability against moisture at the same time.

### CONCRETE MODE FOR CARRYING OUT THE INVENTION

The present invention is explained in more detail below.

The epoxy resin of the present invention is prepared by the reaction of a diol component and epihalohydrin, wherein the diol component comprises 46 to 94 parts by weight of anhydrosugar alcohol and 6 to 54 parts by weight of diol other than anhydrosugar alcohol, based on total 100 parts by weight of the diol component.

The diol component used in preparation of the epoxy resin of the present invention comprises 46 to 94 parts by weight of anhydrosugar alcohol and 6 to 54 parts by weight of diol other than anhydrosugar alcohol, based on total 100 parts by weight of the diol component.

If the amount of anhydrosugar alcohol in total 100 parts by weight of the diol component is less than 46 parts by weight, the coating formed from a composition comprising the prepared epoxy resin exhibits poor anti-fog effect. In contrast, if the amount of anhydrosugar alcohol in total 100 parts by weight of the diol component is greater than 94 parts by weight, the water resistance of the prepared epoxy resin becomes poor, and thus the coating formed from a composition comprising it exhibits poor durability against moisture.

In an embodiment, the amount of anhydrosugar alcohol in total 100 parts by weight of the diol component may be 46 parts by weight or more, 47 parts by weight or more, 48 parts by weight or more, 49 parts by weight or more, or 50 parts by weight or more, and 94 parts by weight or less, 93 parts by weight or less, 92 parts by weight or less, 91 parts by weight or less, or 90 parts by weight or less, but it is not limited thereto.

If the amount of diol other than anhydrosugar alcohol in total 100 parts by weight of the diol component is less than 6 parts by weight, the water resistance of the prepared epoxy resin becomes poor, and thus the coating formed from a composition comprising it exhibits poor durability against moisture. In contrast, if the amount of diol other than anhydrosugar alcohol in total 100 parts by weight of the diol component is greater than 54 parts by weight, the coating formed from a composition comprising the prepared epoxy resin exhibits poor anti-fog effect.

In an embodiment, the amount of diol other than anhydrosugar alcohol in total 100 parts by weight of the diol component may be 6 parts by weight or more, 7 parts by weight or more, 8 parts by weight or more, 9 parts by weight or more, or 10 parts by weight or more, and 54 parts by weight or less, 53 parts by weight or less, 52 parts by weight or less, 51 parts by weight or less, or 50 parts by weight or less, but it is not limited thereto.

In the present invention, the "anhydrosugar alcohol" means any material that is obtained by removing one or more water molecules from a compound-generally referred to as hydrogenated sugar or sugar alcohol-which is obtained by adding hydrogen to the reductive end group in sugar.

The anhydrosugar alcohol may be monoanhydrosugar alcohol, dianhydrosugar alcohol or combination thereof.

The monoanhydrosugar alcohol is an anhydrosugar alcohol formed by removing one molecule of water from inside of the hydrogenated sugar, and it has a tetraol form with four hydroxyl groups in the molecule. In the present invention, the kind of the monoanhydrosugar alcohol is not especially limited, and it may be preferably monoanhydrohexitol, and more concretely 1,4-anhydrohexitol, 3,6-anhydrohexitol, 2,5-anhydrohexitol, 1,5-anhydrohexitol, 2,6-anhydrohexitol or a mixture of two or more of the foregoing.

The dianhydrosugar alcohol is an anhydrosugar alcohol formed by removing two molecules of water from inside of the hydrogenated sugar, and it has a diol form with two hydroxyl groups in the molecule, and can be produced by using hexitol derived from starch. Because dianhydrosugar alcohol is an environmentally friendly material derived from recyclable natural resources, it has received much interest for a long time and researches on its production continue to proceed. Among such dianhydrosugar alcohols, isosorbide produced from sorbitol has the widest industrial applicability at present. In the present invention, the kind of the dianhydrosugar alcohol is not especially limited, and it may be preferably dianhydrohexitol, and more concretely 1,4:3,6-dianhydrohexitol. 1,4:3,6-dianhydrohexitol may be isosorbide, isomannide, isoidide or a mixture of two or more of the foregoing.

In a preferred embodiment of the present invention, the anhydrosugar alcohol may be dianhydrohexitol, and more preferably, it may be selected from the group consisting of isosorbide (1,4:3,6-dianhydrosorbitol), isomannide (1,4:3,6-dianhydromannitol), isoidide (1,4:3,6-dianhydroiditol) or combination thereof, and most preferably, it may be isosorbide.

The diol other than anhydrosugar alcohol may be aliphatic diol, alicyclic diol, aromatic diol or combination thereof, and preferably, it may be a biomass-derived compound derived from biomass raw material in terms of eco-friendliness.

In an embodiment, the diol other than anhydrosugar alcohol may be selected from C3-C12 aliphatic diol, C3-C12 alicyclic diol, C6-C20 aromatic diol or combination thereof, and more concretely:
the C3-C12 aliphatic diol may be selected from the group consisting of propylene glycol; neopentyl glycol; triethylene glycol; 1,4-butanediol; 1,5-pentanediol; 1,6-hexanediol; 1,7-heptanediol; 1,8-octanediol; 1,9-nonanediol; 1,10-decanediol; 1,11-undecanediol; 1,12-dodecanediol; or combination thereof,
the C3-C12 alicyclic diol may be selected from the group consisting of cyclohexane dimethanol; dicyclopentadiene dimethanol; norbornene dimethanol; norbornane dimethanol; cyclooctane dimethanol; cyclooctene dimethanol; cyclooctadiene dimethanol; pentacyclodecane dimethanol; bicyclooctane dimethanol; tricyclodecane dimethanol; bicycloheptene dimethanol; dicyclopentadiene diol; norbornene diol; norbornane diol; cyclooctane diol; cyclooctene diol; cyclooctadiene diol; cyclohexane diol; cyclohexene diol; cyclopentane-1,3-diol; bicyclopentane-1,1'-diol; decahydronaphthalene-1,5-diol; trans,trans-2,6-dimethyl-2,6-octadiene-1,8-diol; 5-methylol-5-ethyl-2-(1,1-dimethyl-2-hydroxyethyl)-1,3-dioxane; 3-methyl-2,2-norbomane dimethanol; 5-norbornene-2,3-dimethanol; norbornane-2,3-trans-dimethanol; 5-norbornene-2,3-dimethanol; tetrahydrofurane diol; or combination thereof, and
the C6-C20 aromatic diol may be selected from the group consisting of resorcinol; hydroquinone; bisphenol A; 2,5-bis(hydroxymethyl)furan; or combination thereof,
but it is not limited thereto.

The epihalohydrin used in preparing the epoxy resin of the present invention may be epihalohydrin unsubstituted or substituted with an alkyl group (e.g., C1-C4 alkyl), and preferably, it may be a biomass-derived compound derived from biomass raw material in terms of eco-friendliness.

In an embodiment, the epihalohydrin may be selected from the group consisting of epichlorohydrin, epibromohydrin, epiiodohydrin, methyl epichlorohydrin, methyl epibromohydrin, methyl epiiodohydrin, or combination thereof, but it is not limited thereto.

According to an embodiment, based on 100 parts by weight of the sum of the anhydrosugar alcohol and the diol other than anhydrosugar alcohol, the amount of epihalohydrin used for reaction may be 460 parts by weight or more, and more concretely, it may be 470 parts by weight or more, 480 parts by weight or more, 490 parts by weight or more, 500 parts by weight or more, 510 parts by weight or more, 520 parts by weight or more, 530 parts by weight or more, 540 parts by weight or more, or 550 parts by weight or more. There is no special limitation to the upper limit of the amount of epihalohydrin used for reaction with 100 parts by weight of the sum of the anhydrosugar alcohol and the diol other than anhydrosugar alcohol, and for example, it may be appropriately 1,600 parts by weight or less, 1,500 parts by weight or less, 1,400 parts by weight or less, 1,300 parts by weight or less, 1,200 parts by weight or less, 1,100 parts by weight or less, 1,000 parts by weight or less, 900 parts by weight or less, 800 parts by weight or less, or 700 parts by weight or less, in terms of economy.

According to an embodiment, the epoxy resin of the present invention may be represented by the following formula 1: 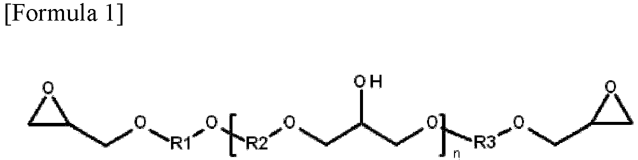 wherein
R1 is a divalent organic group derived from anhydrosugar alcohol,
R2 is a divalent organic group derived from anhydrosugar alcohol; C3-C12 linear or branched alkylene group; C3-C12 cycloalkylene group; or C6-C20 arylene group,
R3 is C3-C12 linear or branched alkylene group; C3-C12 cycloalkylene group; or C6-C20 arylene group, and
n is an integer of 0 to 100.

More concretely,
the divalent organic group derived from anhydrosugar alcohol may be a divalent organic group derived from dianhydrosugar alcohol, more concretely a divalent organic group derived from dianhydrohexitol, and even more concretely a divalent organic group derived from isosorbide, isomannide or isoidide,
the C3-C12 linear or branched alkylene group may be butylene group or hexylene group,
the C3-C12 cycloalkylene group may be tetrahydrofurylene group, cyclohexylene group or cyclohexanedimethylene group,
the C6-C20 arylene group may be 2,5-bis(hydroxymethyl)furylene group, and
n may be an integer of 0 to 50, more concretely 0 to 20, even more concretely 0 to 10.

The other aspect of the present invention provides a method for preparing an epoxy resin, comprising the step of: (1) conducting the first preliminary reaction of anhydrosugar alcohol and epihalohydrin in the presence of basic catalyst; (2) adding diol other than anhydrosugar alcohol to the reaction product obtained in step (1) and conducting the second preliminary reaction; and (3) adding further basic catalyst to the reaction product obtained in step (2) and conducting the main reaction under reduced pressure, wherein the addition amount of the anhydrosugar alcohol is 46 to 94 parts by weight and the addition amount of the diol other than anhydrosugar alcohol is 6 to 54 parts by weight, based on total 100 parts by weight of the sum of the anhydrosugar alcohol and the diol other than anhydrosugar alcohol.

The anhydrosugar alcohol, diol other than anhydrosugar alcohol and epihalohydrin and amounts thereof used in the method for preparing an epoxy resin of the present invention are the same as explained above.

In an embodiment, the basic catalyst may be alkali metal-based catalyst, and more concretely, it may be selected from the group consisting of lithium hydroxide (LiOH), sodium hydroxide (NaOH), potassium hydroxide (KOH), or combination thereof. The basic catalyst may be added to the reaction mixture in a form of aqueous solution (e.g., 50% NaOH aqueous solution).

In an embodiment, the amount of epihalohydrin used in step (1) may be, for example, 460 to 1,600 parts by weight, more concretely 500 to 1,500 parts by weight, and even more concretely 550 to 1,400 parts by weight, based on 100 parts by weight of the sum of the anhydrosugar alcohol used in step (1) and the diol other than anhydrosugar alcohol used in step (2), but it is not limited thereto. If the amount of epihalohydrin used in step (1) is too less than the above level, there is a possibility that the epoxy group present in the generated epoxy resin becomes to less, and in contrast, if the amount is too greater than the above level, the amount of epihalohydrin not participating in the reaction become too much and the productivity may be lowered.

In an embodiment, the amount of the basic catalyst used in step (1) may be, for example, 4 to 11 parts by weight, more concretely 4 to 10 parts by weight, and even more concretely 4 to 8 parts by weight, based on 100 parts by weight of the sum of the anhydrosugar alcohol used in step (1) and the diol other than anhydrosugar alcohol used in step (2), but it is not limited thereto. If the use amount of the basic catalyst goes far beyond the above level, the contents of side reaction products may increase.

In an embodiment, the reaction time of step (1) may be, for example, 0.5 to 6 hours, more concretely 1 to 5 hours, and even more concretely 1.5 to 4 hours, but it is not limited thereto. Also, in an embodiment, the reaction temperature of step (1) may be, for example, 30 to 100°C, more concretely 40 to 90°C, and even more concretely 50 to 80°C, but it is not limited thereto.

The amount of the diol other than anhydrosugar alcohol added in step (2) is 6 to 54 parts by weight, based on 100 parts by weight of the sum of the anhydrosugar alcohol used in step (1) and the diol other than anhydrosugar alcohol used in step (2).

In an embodiment, the reaction time of step (2) may be, for example, 0.5 to 6 hours, more concretely 1 to 5 hours, and even more concretely 1.5 to 4 hours, but it is not limited thereto. Also, in an embodiment, the reaction temperature of step (2) may be, for example, 30 to 100°C, more concretely 40 to 90°C, and even more concretely 50 to 80°C, but it is not limited thereto.

In an embodiment, the amount of the basic catalyst further added in step (3) may be, for example, 40 to 65 parts by weight, more concretely 45 to 65 parts by weight, and even more concretely 50 to 65 parts by weight, based on 100 parts by weight of the sum of the anhydrosugar alcohol used in step (1) and the diol other than anhydrosugar alcohol used in step (2), but it is not limited thereto. If the further added amount of the basic catalyst is too less than the above level, the contents of side reaction products may increase, and in contrast, if the further added amount of the basic catalyst is too greater than the above level, unreacted base remains in the resin, which may increase the pH of the resin.

In an embodiment, the reaction time of step (3) may be, for example, 1 to 6 hours, more concretely 1.5 to 5 hours, and even more concretely 2 to 4 hours, but it is not limited thereto. Also, in an embodiment, the reaction temperature of step (3) may be, for example, 30 to 100°C, more concretely 40 to 90°C, and even more concretely 50 to 80°C, but it is not limited thereto.

Also, in an embodiment, the reduced pressure in step (3) may be, for example, 300 to 50 torr, more concretely 250 to 80 torr, and even more concretely 200 to 100 torr, but it is not limited thereto.

The method for preparing an epoxy resin of the present invention may further comprise a step of (4) filtering the reaction product obtained in step (3).

According to an embodiment, the filtering of the reaction product in step (4) may be conducted by stopping agitation after the reaction of step (3) is completed and allowing the reaction product to stand for a certain period of time, and extracting the upper layer only by using a pump.

The method for preparing an epoxy resin of the present invention may further comprise a step of (5) recovering unreacted epihalohydrin from the filtered product in step (4).

According to an embodiment, the recovery of epihalohydrin in in step (5) may be conducted under conditions of elevated temperature and reduced pressure (for example, a temperature of 140°C to 160°C and a pressure of 3 to 20 torr).

Another aspect of the present invention provides an epoxy resin composition comprising the epoxy resin of the present invention as explained above; and a curing agent.

In a preferred embodiment, the composition may be a composition for anti-fog coating.

In an embodiment, the curing agent may be, for example, a compound having two or more reactive groups reacting with epoxy group, such as polyamine, polycarboxylic anhydride, polyamide, or polythiol, etc., and more concretely, it may be polyamine without aromatic nucleus or polycarboxylic anhydride, but not limited thereto.

The polyamine without aromatic nucleus may be, for example, aliphatic polyamine compound or alicyclic polyamine compound having 2 to 5 amino groups, and more concretely, it may be selected from the group consisting of ethylene diamine, trimethylene tetramine, tetraethylene pentamine, hexamethylene diamine, polyoxyalkylene polyamine, isophorone diamine, 3,9-bis(3-aminopropyl)-2,4,8,10-tetraoxaspiro(5,5) undecane, or combination thereof. The polyoxyalkylene polyamine is polyamine having a structure in which hydroxyl groups of polyoxyalkylene polyol are replaced by amino groups, and for example, it may be polyoxyalkylene di-, tri- or tetraamine having 2 to 4 amino groups.

The polycarboxylic anhydride may be, for example, dicarboxylic anhydride, tricarboxylic anhydride or tetracarboxylic anhydride.

In an embodiment, the epoxy resin and the curing agent may be used in amounts such that the equivalent ratio of the reactive group in the curing agent to the epoxy group in the epoxy resin is 0.8 to 1.2, but it is not limited thereto.

In an embodiment, the epoxy resin composition may further comprise a curing catalyst. As the curing catalyst, tertiary amine, imidazole, Lewis acid, onium salt, dicyandiamide, organic acid dihydrazide or porphine, etc. may be used, and more concretely, tertiary amine, imidazole, phosphine or allyl sulfonium salt may be used.

In addition to the above-explained components, the epoxy resin composition of the present invention may further comprise one or more additives conventionally used in curable epoxy resin compositions.

In an embodiment, the additive may be one or more selected from the group consisting of cure promotor (e.g., tertiary amine such as dimethylaminomethylphenol, trisdimethylaminomethylphenol, benzyldimethylamine, etc.), inorganic filler (e.g., silica, alumina or talc), silane coupling agent, release agent (e.g., stearic acid, palmitic acid, zinc stearate or calcium stearate), pigment and combination thereof.

There is no special limitation to the method for preparing the epoxy resin composition of the present invention, and conventional methods and devices can be used therefor. For instance, the epoxy resin composition can be prepared by mixing and homogenizing the above-explained components sufficiently in an extruder, kneader or roll.

Still another aspect of the present invention provides a coated article comprising a coating layer formed by curing the epoxy resin composition on the surface of the article.

There is no special limitation to the method for coating the epoxy resin composition of the present invention on the surface of the article and the method for curing it, and conventional methods and devices can be used therefor. For instance, the epoxy resin composition can be applied on the surface of the article by using a method such as roll coating, etc. and then heated for curing.

The present invention is explained in more detail through the following Examples and Comparative Examples. However, the scope of the present invention is not limited thereby in any manner.

### EXAMPLES

### <Preparation of bio epoxy resin>

### Example A1: Preparation of bio epoxy resin by using 50 parts by weight of isosorbide and 50 parts by weight of 1,4-butanediol as diol

In a 1L flask containing a cooling tube equipped with a Dean Stark trap, stirrer and nitrogen inlet, 50 g of isosorbide and 700 g of epichlorohydrin were added and dissolved while elevating the temperature to 70°C. When the solution was completely dissolved, 13 g of 50% sodium hydroxide (NaOH) aqueous solution was injected constantly over 2 hours to conduct the first preliminary reaction. Then, to the first preliminary reaction product, 50 g of 1,4-butanediol was incorporated and the second preliminary reaction was conducted for 2 hours. Then, to the second preliminary reaction product, under a temperature of 70°C and reduced pressure of 120 torr, 130 g of 50% sodium hydroxide (NaOH) aqueous solution was injected constantly over 3 hours to conduct the main reaction. The water generated during the main reaction was continuously removed through Dean Stark. After the main reaction was completed, the reaction product was filtered through filter paper, and the remaining resin was washed with acetone. Then, the filtered reaction product was slowly heated to 150°C and the pressure was slowly reduced to 5 torr to recover unreacted epichlorohydrin, thereby to obtain an epoxy resin of formula 1 with an epoxy equivalent weight of 170 g/eq.

### Example A2: Preparation of bio epoxy resin by using 70 parts by weight of isosorbide and 30 parts by weight of 1,6-hexanediol as diol

In a 1L flask containing a cooling tube equipped with a Dean Stark trap, stirrer and nitrogen inlet, 70 g of isosorbide and 630 g of epichlorohydrin were added and dissolved while elevating the temperature to 70°C. When the solution was completely dissolved, 11 g of 50% sodium hydroxide (NaOH) aqueous solution was injected constantly over 2 hours to conduct the first preliminary reaction. Then, to the first preliminary reaction product, 30 g of 1,6-hexanediol was incorporated and the second preliminary reaction was conducted for 2 hours. Then, to the second preliminary reaction product, under a temperature of 70°C and reduced pressure of 120 torr, 109 g of 50% sodium hydroxide (NaOH) aqueous solution was injected constantly over 3 hours to conduct the main reaction. The water generated during the main reaction was continuously removed through Dean Stark. After the main reaction was completed, the reaction product was filtered through filter paper, and the remaining resin was washed with acetone. Then, the filtered reaction product was slowly heated to 150°C and the pressure was slowly reduced to 5 torr to recover unreacted epichlorohydrin, thereby to obtain an epoxy resin of formula 1 with an epoxy equivalent weight of 198 g/eq.

### Example A3: Preparation of bio epoxy resin by using 90 parts by weight of isosorbide and 10 parts by weight of 2,5-bis(hydroxymethyl)furan as diol

In a 1L flask containing a cooling tube equipped with a Dean Stark trap, stirrer and nitrogen inlet, 90 g of isosorbide and 550 g of epichlorohydrin were added and dissolved while elevating the temperature to 70°C. When the solution was completely dissolved, 9 g of 50% sodium hydroxide (NaOH) aqueous solution was injected constantly over 2 hours to conduct the first preliminary reaction. Then, to the first preliminary reaction product, 10 g of 2,5-bis(hydroxymethyl)furan was incorporated and the second preliminary reaction was conducted for 2 hours. Then, to the second preliminary reaction product, under a temperature of 70°C and reduced pressure of 120 torr, 100 g of 50% sodium hydroxide (NaOH) aqueous solution was injected constantly over 3 hours to conduct the main reaction. The water generated during the main reaction was continuously removed through Dean Stark. After the main reaction was completed, the reaction product was filtered through filter paper, and the remaining resin was washed with acetone. Then, the filtered reaction product was slowly heated to 150°C and the pressure was slowly reduced to 5 torr to recover unreacted epichlorohydrin, thereby to obtain an epoxy resin of formula 1 with an epoxy equivalent weight of 203 g/eq.

### Comparative Example A1: Preparation of bio epoxy resin by using 95 parts by weight of isosorbide and 5 parts by weight of 1,4-butanediol as diol

In a 1L flask containing a cooling tube equipped with a Dean Stark trap, stirrer and nitrogen inlet, 95 g of isosorbide and 700 g of epichlorohydrin were added and dissolved while elevating the temperature to 70°C. When the solution was completely dissolved, 13 g of 50% sodium hydroxide (NaOH) aqueous solution was injected constantly over 2 hours to conduct the first preliminary reaction. Then, to the first preliminary reaction product, 5 g of 1,4-butanediol was incorporated and the second preliminary reaction was conducted for 2 hours. Then, to the second preliminary reaction product, under a temperature of 70°C and reduced pressure of 120 torr, 130 g of 50% sodium hydroxide (NaOH) aqueous solution was injected constantly over 3 hours to conduct the main reaction. The water generated during the main reaction was continuously removed through Dean Stark. After the main reaction was completed, the reaction product was filtered through filter paper, and the remaining resin was washed with acetone. Then, the filtered reaction product was slowly heated to 150°C and the pressure was slowly reduced to 5 torr to recover unreacted epichlorohydrin, thereby to obtain an epoxy resin with an epoxy equivalent weight of 183 g/eq.

### Comparative Example A2: Preparation of bio epoxy resin by using 45 parts by weight of isosorbide and 55 parts by weight of 1,6-hexanediol as diol

In a 1L flask containing a cooling tube equipped with a Dean Stark trap, stirrer and nitrogen inlet, 45 g of isosorbide and 600 g of epichlorohydrin were added and dissolved while elevating the temperature to 70°C. When the solution was completely dissolved, 9 g of 50% sodium hydroxide (NaOH) aqueous solution was injected constantly over 2 hours to conduct the first preliminary reaction. Then, to the first preliminary reaction product, 55 g of 1,6-hexanediol was incorporated and the second preliminary reaction was conducted for 2 hours. Then, to the second preliminary reaction product, under a temperature of 70°C and reduced pressure of 120 torr, 90 g of 50% sodium hydroxide (NaOH) aqueous solution was injected constantly over 3 hours to conduct the main reaction. The water generated during the main reaction was continuously removed through Dean Stark. After the main reaction was completed, the reaction product was filtered through filter paper, and the remaining resin was washed with acetone. Then, the filtered reaction product was slowly heated to 150°C and the pressure was slowly reduced to 5 torr to recover unreacted epichlorohydrin, thereby to obtain an epoxy resin with an epoxy equivalent weight of 225 g/eq.

### Comparative Example A3: Preparation of bio epoxy resin by using 100 parts by weight of isosorbide as diol

In a 1L flask containing a cooling tube equipped with a Dean Stark trap, stirrer and nitrogen inlet, 100 g of isosorbide and 633 g of epichlorohydrin were added and dissolved while elevating the temperature to 70°C. When the solution was completely dissolved, 11 g of 50% sodium hydroxide (NaOH) aqueous solution was injected constantly over 2 hours to conduct the preliminary reaction. Then, to the preliminary reaction product, under a temperature of 70°C and reduced pressure of 120 torr, 109 g of 50% sodium hydroxide (NaOH) aqueous solution was injected constantly over 3 hours to conduct the main reaction. The water generated during the main reaction was continuously removed through Dean Stark. After the main reaction was completed, the reaction product was filtered through filter paper, and the remaining resin was washed with acetone. Then, the filtered reaction product was slowly heated to 150°C and the pressure was slowly reduced to 5 torr to recover unreacted epichlorohydrin, thereby to obtain an epoxy resin with an epoxy equivalent weight of 189 g/eq.

### Comparative Example A4: Preparation of bio epoxy resin by using 100 parts by weight of 1,4-butanediol as diol

In a 1L flask containing a cooling tube equipped with a Dean Stark trap, stirrer and nitrogen inlet, 100 g of 1,4-butanediol and 633 g of epichlorohydrin were added and dissolved while elevating the temperature to 70°C. When the solution was completely dissolved, 11 g of 50% sodium hydroxide (NaOH) aqueous solution was injected constantly over 2 hours to conduct the preliminary reaction. Then, to the preliminary reaction product, under a temperature of 70°C and reduced pressure of 120 torr, 109 g of 50% sodium hydroxide (NaOH) aqueous solution was injected constantly over 3 hours to conduct the main reaction. The water generated during the main reaction was continuously removed through Dean Stark. After the main reaction was completed, the reaction product was filtered through filter paper, and the remaining resin was washed with acetone. Then, the filtered reaction product was slowly heated to 150°C and the pressure was slowly reduced to 5 torr to recover unreacted epichlorohydrin, thereby to obtain an epoxy resin with an epoxy equivalent weight of 131 g/eq.

### <Preparation of composition for anti-fog coating>

### Examples B1 to B3 and Comparative Examples B1 to B4: Standard preparation method

Per 100 parts by weight of each of the bio epoxy resins prepared in Examples B 1 to B3 and Comparative Examples B 1 to B4 as an epoxy resin, 90 parts by weight of polyoxyalkylene triamine (Jeffamine T-403, Huntsman) was mixed to prepare a composition for anti-fog coating, and it was used to form a coating film with thickness of 150 µm on a glass substrate, and the coating film was cured at room temperature for 24 hours, and then at 80°C for 2 hours, to prepare a sample coated with a cured product of epoxy resin.

### <Evaluation of the properties of the composition for anti-fog coating>

### (1) Property of absorbing moisture and inhibiting fog (anti-fog effect)

Each sample coated with a cured product of each of the epoxy resins of Examples B 1 to B3 and Comparative Examples B 1 to B4 was kept in an environment with temperature of 20°C and relative humidity of 50% for 1 hour, and then placed above hot water of 40°C, and the time was measured until the sample became cloudy and distortion of the perspective image due to the water film was recognized. The longer time means the better anti-fog effect.

Conventional soda lime glass without anti-fog treatment was observed to have fog formation thereon within 2 to 5 seconds. The time for anti-fog property necessary in anti-fog application for practical use is 50 seconds or longer, preferably 70 seconds or longer, and more preferably 100 seconds or longer.

### (2) Water resistance

Each sample coated with a cured product of each of the epoxy resins of Examples B 1 to B3 and Comparative Examples B1 to B4 was subjected to x-cut and then immersed in hot water of 70°C, and the time was measured until the coating film was peeled off. The longer time for peeling off the coating film means the better water resistance, and the time for practical use is preferably 3 days or longer, and more preferably 5 days or longer.

**[Table 1]**

| Item | | Anti-fog effect | Water resistance |
|---|---|---|---|
| | | Property of absorbing moisture and inhibiting fog | Peeling off time |
| Example | B1 | 600 seconds or longer | 7 days |
| | B2 | 600 seconds or longer | 6 days |
| | B3 | 600 seconds or longer | 5 days |
| Comparative Example | B1 | 600 seconds or longer | 10 hours |
| | B2 | 240 seconds | 6 days |
| | B3 | 600 seconds or longer | within 30 seconds |
| | B4 | 120 seconds | 7 days |

As shown in Table 1 above, the compositions for anti-fog coating of Examples B1 to B3 using the bio epoxy resin according to the present invention had excellent anti-fog effect such that 600 seconds or more was observed for the property of inhibiting fog, and at the same time, exhibited excellent water resistance in hot water of 70°C.

However, the compositions for anti-fog coating of Comparative Examples B1 and B3 exhibited very poor water resistance, and the compositions for anti-fog coating of Comparative Examples B2 and B4 had very poor anti-fog effect.

## Claims

1. An epoxy resin prepared by the reaction of a diol component and epihalohydrin, wherein the diol component comprises 46 to 94 parts by weight of anhydrosugar alcohol and 6 to 54 parts by weight of diol other than anhydrosugar alcohol, based on total 100 parts by weight of the diol component.

2. The epoxy resin of claim 1, wherein the anhydrosugar alcohol is dianhydrohexitol.

3. The epoxy resin of claim 2, wherein the dianhydrohexitol is selected from the group consisting of isosorbide, isomannide, isoidide or combination thereof.

4. The epoxy resin of claim 1, wherein the diol other than anhydrosugar alcohol is selected from C3-C12 aliphatic diol, C3-C12 alicyclic diol, C6-C20 aromatic diol or combination thereof.

5. The epoxy resin of claim 4, wherein:
the C3-C12 aliphatic diol is selected from the group consisting of propylene glycol; neopentyl glycol; triethylene glycol; 1,4-butanediol; 1,5-pentanediol; 1,6-hexanediol; 1,7-heptanediol; 1,8-octanediol; 1,9-nonanediol; 1,10-decanediol; 1,11-undecanediol; 1,12-dodecanediol; or combination thereof,
the C3-C12 alicyclic diol is selected from the group consisting of cyclohexane dimethanol; dicyclopentadiene dimethanol; norbornene dimethanol; norbornane dimethanol; cyclooctane dimethanol; cyclooctene dimethanol; cyclooctadiene dimethanol; pentacyclodecane dimethanol; bicyclooctane dimethanol; tricyclodecane dimethanol; bicycloheptene dimethanol; dicyclopentadiene diol; norbornene diol; norbornane diol; cyclooctane diol; cyclooctene diol; cyclooctadiene diol; cyclohexane diol; cyclohexene diol; cyclopentane-1,3-diol; bicyclopentane-1,1'-diol; decahydronaphthalene-1,5-diol; trans,trans-2,6-dimethyl-2,6-octadiene-1,8-diol; 5-methylol-5-ethyl-2-(1,1-dimethyl-2-hydroxyethyl)-1,3-dioxane; 3-methyl-2,2-norbornane dimethanol; 5-norbornene-2,3-dimethanol; norbornane-2,3-trans-dimethanol; 5-norbornene-2,3-dimethanol; tetrahydrofurane diol; or combination thereof, and
the C6-C20 aromatic diol is selected from the group consisting of resorcinol; hydroquinone; bisphenol A; 2,5-bis(hydroxymethyl)furan; or combination thereof.

6. The epoxy resin of claim 1, wherein the epihalohydrin is selected from the group consisting of epichlorohydrin, epibromohydrin, epiiodohydrin, methyl epichlorohydrin, methyl epibromohydrin, methyl epiiodohydrin, or combination thereof.

7. The epoxy resin of claim 1, wherein the amount of epihalohydrin used for reaction is 460 parts by weight or more, based on 100 parts by weight of the sum of the anhydrosugar alcohol and the diol other than anhydrosugar alcohol.

8. The epoxy resin of claim 1, which is represented by the following formula 1: 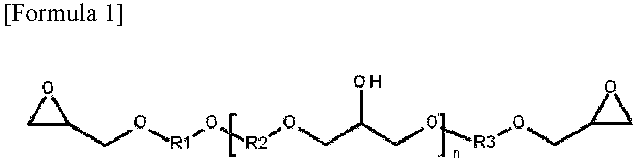 wherein
R1 is a divalent organic group derived from anhydrosugar alcohol,
R2 is a divalent organic group derived from anhydrosugar alcohol; C3-C12 linear or branched alkylene group; C3-C12 cycloalkylene group; or C6-C20 arylene group, R3 is C3-C12 linear or branched alkylene group; C3-C12 cycloalkylene group; or C6-C20 arylene group, and
n is an integer of 0 to 100.

9. A method for preparing an epoxy resin, comprising the step of:
(1) conducting the first preliminary reaction of anhydrosugar alcohol and epihalohydrin in the presence of basic catalyst;
(2) adding diol other than anhydrosugar alcohol to the reaction product obtained in step (1) and conducting the second preliminary reaction; and
(3) adding further basic catalyst to the reaction product obtained in step (2) and conducting the main reaction under reduced pressure,
wherein the addition amount of the anhydrosugar alcohol is 46 to 94 parts by weight and the addition amount of the diol other than anhydrosugar alcohol is 6 to 54 parts by weight, based on total 100 parts by weight of the sum of the anhydrosugar alcohol and the diol other than anhydrosugar alcohol.

10. The method for preparing an epoxy resin of claim 9, wherein the basic catalyst is alkali metal-based catalyst.

11. The method for preparing an epoxy resin of claim 9, wherein the amount of the basic catalyst used in step (1) is 4 to 11 parts by weight, based on 100 parts by weight of the sum of the anhydrosugar alcohol used in step (1) and the diol other than anhydrosugar alcohol used in step (2).

12. The method for preparing an epoxy resin of claim 9, wherein the amount of the basic catalyst further added in step (3) is 40 to 65 parts by weight, based on 100 parts by weight of the sum of the anhydrosugar alcohol used in step (1) and the diol other than anhydrosugar alcohol used in step (2).

13. An epoxy resin composition comprising an epoxy resin according to any of claims 1 to 8; and a curing agent.

14. The epoxy resin composition of claim 13, wherein the composition is a composition for anti-fog coating.

15. A coated article comprising a coating layer formed by curing an epoxy resin composition according to claim 13 on the surface of the article.
